# EUROPEAN PATENT APPLICATION

(11) **EP 3 836 369 A1**
(43) Date of publication of application: **16.06.2021**
(21) Application number: 19214588.6
(22) Date of filing: 09.12.2019
(51) Int. Cl.: H02K 7/00, H02K 9/06, H02K 5/10, H02K 5/18

(54) **ROTATING ELECTRIC MACHINE AND VENTILATION MODE CONVERSION PLUG FOR A ROTATING ELECTRIC MACHINE**

(71) Applicant: Weg Equipamentos Elétricos S.A., 89256-900 Jaraguá do Sul, SC (BR)
(72) Inventor: MARIN KIST, Leandro Felipe, JARAGUA DO SUL, SC (BR); SCHMIDT FERREIRA, Alexandre, 89254800 JARAGUA DO SUL, SC (BR); VALENTINI, Jean Carlos, 89265202 JARAGUA DO SUL, SC (BR); LAFIN, Patrick, 89254800 JARAGUA DO SUL, SC (BR); ADILSON PASSIG, Jhonatan, 89254800 JARAGUA DO SUL, SC (BR)
(74) Representative: Cabinet Beaumont

(57) **Abstract**

The present invention relates to a rotating electric machine of the type comprising a housing that houses an active core with a rotor and a stator, the rotor being mounted on a shaft (8), the housing having an opening coincident with the shaft, the opening being configured to receive one of a fan (6) configured for mounting on the shaft (8) and a conversion plug (7) configured to close the opening.

## Description

### FIELD OF THE INVENTION

The present invention relates to a rotating electric machine, and more specifically, to a rotating electrical machine with a conversion plug for convention the ventilation mode of the machine.

### BACKGROUND OF THE INVENTION

Several different types of electrical machine casings are known in the art, which basically comprise a housing that houses parts and components of the machine.

As is well known to those skilled in the art, the housing is adapted to house a number of internal components and also to receive a number of external accessories and components which are secured to the housing by different fastening systems.

The rotating electric machines can also include ventilation systems, whose purpose is to dissipate the heat generated by the machine, keeping its internal temperature within pre-established operating limits.

In the mechanical design of rotating electric machines, different ventilation modes can be selected. Two commonly used ventilation modes are the TEFC (*totally enclosed fan cooled*) mode and the TEAO (*totally enclosed air over*) mode.

Machines using the TEFC ventilation mode comprise a fan mounted on the machine shaft, outside the housing, and a deflector cover over the fan. Thus, heat dissipation is done through the outer surface of the enclosure.

Machines using the TEAO ventilation mode are generally exempt from their own ventilation system, and their cooling comes from the very application in which the machine is coupled, and which generates the airflow that passes over the enclosure.

Thus, the adopted ventilation mode influences the mechanical design of the electric machine, so that different housings and shafts are used for different ventilation modes.

The need for changes in the mechanical design for each ventilation mode limits the application of electrical machine housings, and consequently increases the cost of the machines.

### OBJECTS OF THE INVENTION

It is an object of the present invention to provide a rotating electric machine that is capable of supporting different ventilation modes in the same housing mechanical design.

It is another object of the present invention to provide a rotating electric machine with a fan fastening system that eliminates the need for additional sealing elements.

It is a further object of the present invention to provide a rotating electric machine that enables the conversion, in a same housing and shaft mechanical design, from a TEFC type ventilation mode to a TEAO type ventilation mode.

It is another object of the present invention to provide a rotating electric machine that enables the conversion, in the same casing and shaft mechanical design, from a TEAO type ventilation mode to a TEFC type ventilation mode.

### BRIEF DESCRIPTION OF THE INVENTION

The present invention contemplates a rotating electric machine of the type comprising a housing that houses an active core with a rotor and a stator, the rotor being mounted on a shaft, the housing having an opening aligned with the shaft, and the opening being configured to receive, without any change in shaft length, one of: a fan configured to be mounted to the shaft; and a conversion plug configured to close the opening.

In one embodiment of the invention, the conversion plug comprises a cylindrical body part sized to fit, by interference, to the opening of the housing; and a lid part having a diameter greater than the diameter of the opening of the housing.

In one embodiment of the invention, the fan comprises a hub portion configured for engagement with the end of shaft.

The hub portion may comprise an inner circular shoulder cooperating with a circular recess at the end of the shaft, and the shaft may comprise a bevel cooperating with an end of the hub portion.

### BRIEF DESCRIPTION OF THE DRAWINGS

The present invention will be described in more detail below with reference to the accompanying drawings in which:
**Figure 1** is a side view of an electric machine according to the present invention;
**Figure 2** is a perspective view of an electric machine according to the present invention; the machine being shown without the deflector cover;
**Figure 3** is a cross-sectional view of the rear end of an electric machine according to the present invention, showing the fit between the fan and the machine shaft;
**Figure 4** is a perspective view of the shaft end of a rotating electric machine according to the present invention;
**Figure 5** is a side view of an electric machine according to the present invention; the machine being shown with a conversion plug;
**Figure 6** is a perspective view of a conversion plug for a rotating electric machine according to the present invention; and
**Figure 7** is a cross-sectional view of the rear end of an electric machine according to the present invention showing the fit between the plug and the housing of the rotating electric machine.

### DETAILED DESCRIPTION OF THE INVENTION

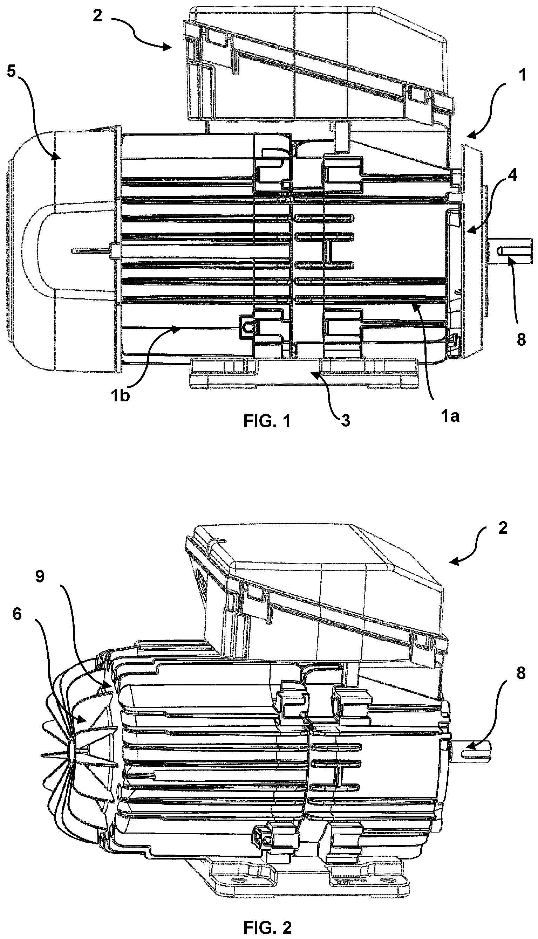

Figures 1 to 7 show an embodiment of the rotating electric machine according to the present invention.

Although the present invention is described embodied in an electric motor, it should be understood that the solution of the present invention could equally be applied to other rotating electric machines comprising a housing, such as any rotating electric machine having such features.

As can be seen from Figure 1, the electric motor comprises a housing 1 split in the axial direction, formed by a first housing part 1a and a second housing part 1b.

It should be noted, however, that the present invention could be embodied in electrical machines with housings having different design features, such as, for example, a one-piece main body with end caps.

As is well known to those skilled in the art, the housing of the motor houses a number of internal components and receives a number of external accessories and components which are secured to the housing by different fastening systems. Thus, as external components, the electric motor of figure 1 has a terminal box 2, a foot 3, a flange 4, a shaft 8 and a deflector cover 5. The function of these components is well known to those skilled in the art and will not be here discussed in detail.

Figure 2 shows the electric motor without the deflector cover 5, so that the fan 6 is visible.

In this embodiment of the invention, the housing has an opening axially coincident with the shaft 8 of the electric motor so as to allow the fan 6 to be mounted to the shaft.

Thus, in the configuration shown in figures 1 and 2, the electric machine of the present invention is operated in a TEFC ventilation mode, wherein the fan 6 is mounted / fixed to the electric machine shaft.

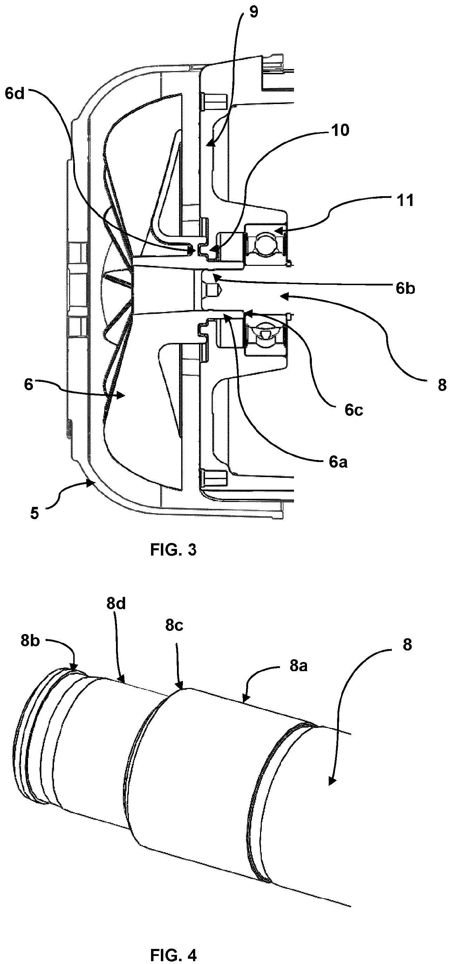

Figure 3 is a cross-sectional view showing the attachment of fan 6 to the shaft 8, and figure 4 shows an enlarged view of the end of the shaft 8 that receives the fan.

As can be seen in figures 3 and 4, the fan 6 has a hub portion 6a configured to engage with the end of the shaft 8. In the illustrated embodiment, the hub portion 6a comprises an inner circular shoulder 6b which cooperates with a circular recess 8b at the end of the shaft.

As best illustrated in Figure 4, the end of the shaft has a diameter difference between the shaft portions 8a and 8d, forming a bevel 8c surrounding the shaft. Thus, the end 6c of the hub portion 6a rests against the bevel 8c of the shaft 8.

The rear end 9 of the electrical machine housing may further comprise a labyrinth portion 10 near the hole through which the shaft passes. In that embodiment, the hub portion 6a further comprises a circular labyrinth wall 6d that cooperates with the labyrinth portion 10 of the rear end 9 of the housing.

As shown in Figure 4, the shaft end 8 is sized such that the shaft portion 8a is configured to contact a bearing 11, with the end 6c of the hub portion 6a resting on the bevel 8c.

The present invention provides an effective means for converting the ventilation of the electrical machine of the present invention from a TEFC type ventilation mode to a TEAO type ventilation mode, and vice versa.

Thus, the electric machine of the present invention comprises a conversion plug 7 which is configured to close the fan attachment opening, after the removal of the fan.

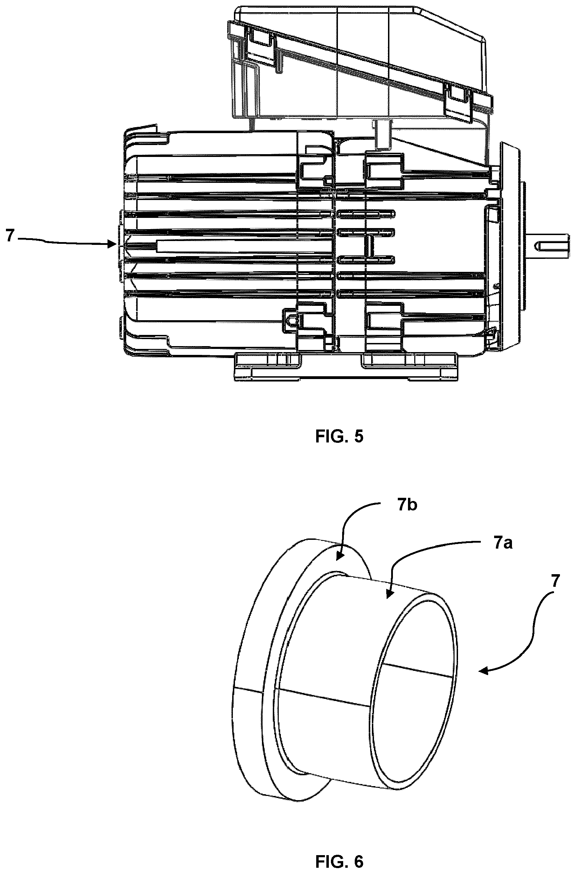

Figure 5 shows the rotating electric machine of the present invention with the conversion plug 7 inserted, and Figure 6 shows a perspective view of the conversion plug 7.

The plug 7 may be made, for example, of polymer, elastomer or metal.

For conversion from TEFC ventilation mode to TEAO ventilation mode, the deflector cover 5 and fun 6 are removed and, as best illustrated in Figure 5, the conversion plug 7 is inserted into the opening of the housing. It is noteworthy that the conversion is performed without requiring any change in the length of the shaft.

Accordingly, in the embodiment of the invention shown in the figures, the shaft length is such that the shaft end receiving the fan does not project axially out of the housing opening.

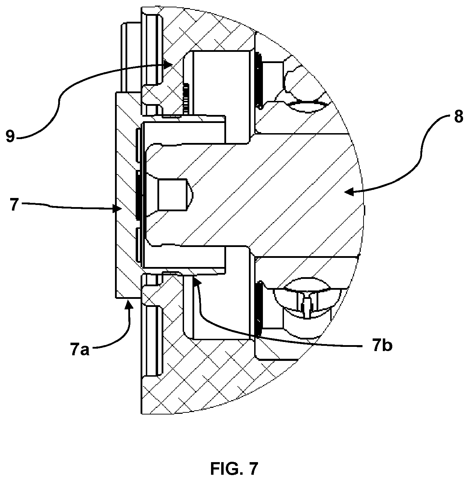

As best illustrated in Figures 6 and 7, in one embodiment of the present invention, the conversion plug 7 comprises a cylindrical body part 7a and a lid part 7b.

The cylindrical body part 7a is sized to fit, by interference, to opening of housing, and the lid part 7b has a diameter larger than the diameter of the opening of the housing, so as to seal the opening and serve as a stop for the plug .

Thus, the present invention enables the conversion of ventilation modes with the same mechanical design of the housing and shaft, with a simple and inexpensive solution.

Having described an exemplary embodiment of the present invention, it should be understood that the scope of the present invention encompasses other possible variations of the inventive concept described, being limited only by the scope of the appended claims, including the possible equivalents thereof.

## Claims

1. Rotating electric machine of the type comprising a housing that houses an active core with a rotor and a stator, the rotor being mounted on a shaft (8), the housing having an opening aligned with the shaft, the machine being **characterized by** the fact that the opening is configured to receive, without any modification in a length of the shaft (8), one of:
a fan (6) configured for mounting on the shaft (8); and
a conversion plug (7) configured to close the opening of the housing.

2. Machine according to claim 1, **characterized in that** the conversion plug (7) comprises:
a cylindrical body part (7a) sized to fit, by interference, to the opening of the housing; and
a lid part (7b) having a diameter greater than a diameter of the opening of the housing.

3. Machine according to claim 1, **characterized in that** the fan (6) comprises a hub portion (6a) configured for engagement with an end of the shaft (8).

4. Machine according to claim 3, **characterized in that** the fan (6) comprises a hub portion (6a) comprising an inner circular shoulder (6b) which cooperates with a circular recess (8b) at the end of the shaft (8).

5. Machine according to claim 4, **characterized in that** the shaft (8) comprises a bevel (8c) which cooperates with an end (6c) of the hub portion (6a).

6. Machine according to any one of claims 1 to 5, **characterized in that** the end of the shaft (8) which is configured for mounting the fan (6) does not project axially outside of the opening of the housing.

7. Ventilation mode conversion plug for a rotating electric machine of the type comprising a housing that houses an active core with a rotor and a stator, the rotor being mounted on a shaft (8), the housing having an opening configured for receiving a fan to be mounted on the shaft, **characterized in that** it is configured to close the opening when the fan is absent and comprising:
a cylindrical body part (7a) and a lid part (7b), the cylindrical body part (7a) being sized to fit, by interference, to the opening of the housing; and
the lid portion (7b) having a diameter larger than a diameter of the opening of the housing.
